# EUROPÄISCHE PATENTSCHRIFT

(11) **EP 1 105 897 B1**
(45) Veröffentlichungstag und Bekanntmachung des Hinweises auf die Patenterteilung: **15.05.2002**
(21) Anmeldenummer: 99952318.6
(22) Anmeldetag: 06.08.1999
(51) Int. Cl.: H01H 9/54, B60L 3/00

(54) **EINRICHTUNG ZUM KURZSCHLIESSEN**
SHORT-CIRCUITING DEVICE
DISPOSITIF DE COURT-CIRCUITAGE

(30) Priorität: 19.08.1998 DE 19837628
(43) Veröffentlichungstag der Anmeldung: 13.06.2001
(73) Patentinhaber: SIEMENS AKTIENGESELLSCHAFT, 80333 München (DE)
(72) Erfinder: SCHNEIDER, Egid, D-91085 Weisendorf (DE); ZACHMEIER, Markus, D-91056 Erlangen (DE)
(86) Internationale Anmeldenummer: DE9902461
(87) Internationale Veröffentlichungsnummer: WO0011692

(56) Entgegenhaltungen:
- DE-A- 4 447 441
- US-A- 4 618 906

## Beschreibung

Die Erfindung betrifft eine Einrichtung zum Kurzschließen einer ersten elektrischen Leitung mit einer zweiten elektrischen Leitung, wobei die erste elektrische Leitung und die zweite elektrische Leitung durch eine mechanische Schaltvorrichtung kurzschließbar sind.

Derartige Einrichtungen zum Kurzschließen sind z. B. aus der Siemens-Produktinformation "Kurzschließer SITRAS®SCD96 Spannungsbegrenzungseinrichtung für Gleichstrom-Bahnanlagen", Bestell-Nr. A52811-C2720-D11-A5-OOB1, bekannt. Die bekannten Einrichtungen zum Kurzschließen werden in Bahnstromversorgungsanlagen eingesetzt. Bei Gleichstromversorgung wird hierbei die erste elektrische Leitung von der Rückleitung (bei Gleichstrom-Bahnanlagen ist dies die Fahrschiene) und die zweite elektrische Leitung von der Erdungsleitung gebildet.

Bei Isolatorüberschlägen, bei Überschlägen an Hörnerableitern der Fahrleitungsanlage und bei anderen ungewollten Verbindungen zwischen der Fahrdrahtspannung von beispielsweise 1500 Volt Gleichspannung und geerdeten Anlagenbauteilen treten Spannungen zwischen den Fahrschienen, die die Rückleitungen bilden, und der Erdungsanlage bis maximal 1500 Volt auf. Verlöschen die Lichtbögen nicht wegen der Netzfolgeströme oder bleiben die Kurzschlüsse aus anderen Gründen bestehen, greift die mechanische Schaltvorrichtung des Kurzschließers nach einer Ansprechzeit von ca. 60 Millisekunden ein und verbindet Rückleitung und Erdungsanlage. Bei stromstarken Fehlern löst der Streckenschutz aus. Damit können zum einen unzulässige Berührungsspannungen an der Rückleitung auftreten. Andererseits können Baugruppen, die an die Fahrschienen angeschlossen sind und keine ausreichende Spannungsfestigkeit aufweisen, zerstört werden.

Aufgabe der vorliegenden Erfindung ist es, eine gattungsgemäße Einrichtung zum Kurzschließen zu schaffen, die kürzere Ansprechzeiten aufweist.

Die Aufgabe wird erfindungsgemäß durch die Merkmale des Anspruchs 1 gelöst. Vorteilhafte Ausgestaltungen der Erfindung sind jeweils Gegenstand von weiteren Ansprüchen.

Die erfindungsgemäße Einrichtung zum Kurzschließen einer ersten elektrischen Leitung mit einer zweiten elektrischen Leitung weist eine mechanische Schaltvorrichtung auf, durch die die erste elektrische Leitung und die zweite elektrische Leitung kurzschließbar sind. Erfindungsgemäß ist parallel zum mechanischen Schalter wenigstens eine elektronische Schaltvorrichtung angeordnet, durch die die Spannungsdifferenz zwischen der ersten elektrischen Leitung und der zweiten elektrischen Leitung überbrückbar ist.

Durch die elektronische Schaltvorrichtung weist die in Anspruch 1 definierte Einrichtung zum Kurzschließen eine wesentlich kürzere Ansprechzeit auf. Dadurch wird der Schutz von Personen gegen elektrischen Schlag und der Schutz von Elektronikbaugruppen, die bei Bahnstromversorgungsanlagen zwischen Fahrschienen und Erdungsanlage angeschlossen sind, verbessert, da Überspannungen zwischen der ersten elektrischen Leitung (Rückleitung, die von der Fahrschiene gebildet wird) und der zweiten elektrischen Leitung (Erdungsleitung) nicht mehr oder nur noch kurzzeitig auftreten. Damit lassen sich Schäden an den Elektronikbaugruppen zwischen Fahrschienen und Erdungsanlage mit hoher Wahrscheinlichkeit vermeiden.

Gemäß einer Ausgestaltung nach Anspruch 2 ist durch die elektronische Schaltvorrichtung nach dem Überbrücken der ersten elektrischen Leitung und der zweiten elektrischen Leitung zusätzlich die mechanische Schaltvorrichtung auslösbar. Dadurch wird in vorteilhafter Weise die elektronische Schaltvorrichtung entlastet.

Im Rahmen der Erfindung können die Leistungshalbleiter bei der elektronischen Schaltvorrichtung beispielsweise als GTO-Thyristoren, als Thyristoren oder als Transistoren ausgebildet sein.

Bei einer Ausführungsform gemäß Anspruch 3 ist die elektronische Schaltvorrichtung als Thyristorbeschaltung ausgebildet. Die Thyristorbeschaltung umfaßt wenigstens einen Thyristor, dessen Kathode mit der ersten elektrischen Leitung und dessen Anode mit der zweiten elektrischen Leitung verbunden ist. An das Gate des Thyristors ist eine Ansteuerschaltung geführt, die eine Reihenschaltung aus Breakover Diode, Zündvorwiderstand und Schutzdiode umfaßt.

Gemäß einer Ausgestaltung nach Anspruch 4 ist dem Thyristor zusätzlich ein Stromrelais vorgeschaltet, das den mechanischen Schalter ansteuert. Nach dem Schließen der mechanischen Schaltvorrichtung verlöscht der Thyristor aufgrund seiner parallelen Anordnung zur mechanischen Schaltvorrichtung selbsttätig. Demgegenüber kann ein GTO-Thyristor zusätzlich zwangsgelöscht werden. Die Einrichtung gemäß Anspruch 4 bietet für die Elektronikbaugruppen einen nochmals verbesserten Schutz vor Überspannungsschäden.

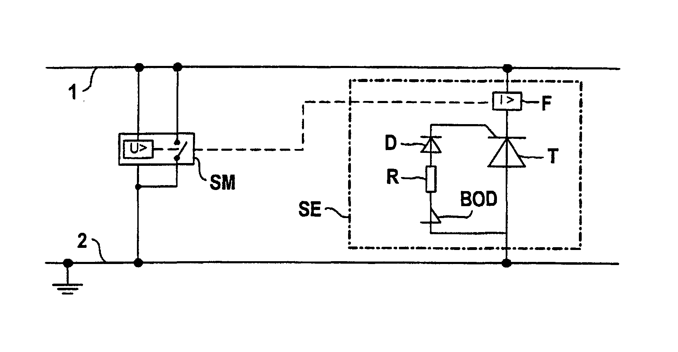

Weitere vorteilhafte Ausgestaltungen der Erfindung werden anhand eines nachfolgend in der Zeichnung dargestellten Ausführungsbeispiels näher erläutert.

In der Zeichnung ist mit 1 eine erste elektrische Leitung bezeichnet, die bei einer Bahnstromversorgung die Rückleitung darstellt. Bei Gleichstromversorgung wird die Rückleitung von wenigstens einer Fahrschiene gebildet. Mit 2 ist eine zweite elektrische Leitung bezeichnet, die im gezeigten Ausführungsbeispiel eine Erdungsleitung (Bauwerkserde) bildet.

Zwischen der Rückleitung 1 und der Erdungsleitung 2 ist eine mechanische Schaltvorrichtung SM angeordnet, durch die die Rückleitung 1 und die Erdungsleitung 2 kurzschließbar sind.

Erfindungsgemäß ist parallel zur mechanischen Schaltvorrichtung SM wenigstens eine elektronische Schaltvorrichtung SE angeordnet, durch die die Spannungsdifferenz zwischen der Rückleitung 1 und der Erdungsleitung 2 überbrückbar ist. Durch die elektronische Schaltvorrichtung SE ist nach dem Überbrücken der ersten elektrischen Leitung 1 und der zweiten elektrischen Leitung 2 zusätzlich die mechanische Schaltvorrichtung SM auslösbar.

Im dargestellten Ausführungsbeispiel ist die elektronische Schaltvorrichtung SE als Thyristorbeschaltung ausgebildet. Die Thyristorbeschaltung umfaßt wenigstens einen Thyristor T, dessen Kathode mit der Rückleitung 1 verbunden ist. Weiterhin ist der Thyristor T mit seiner Anode mit der Erdungsleitung 2 verbunden.

An das Gate des Thyristors T ist eine Ansteuerschaltung geführt. Die Ansteuerschaltung besteht bei dem in der Zeichnung dargestellten Ausführungsbeispiel aus einer Schutzdiode D, der ein Zündvorwiderstand R nachgeschaltet ist. Dem Zündwiderstand R ist wiederum eine Breakover Diode BOD nachgeschaltet.

Weiterhin ist bei der in der Zeichnung dargestellten Thyristorbeschaltung dem Thyristor T ein Stromrelais F vorgeschaltet. Durch das Stromrelais F wird die mechanische Schaltvorrichtung SM angesteuert.

Bei der in der Zeichnung dargestellten elektronischen Schaltvorrichtung SE schaltet der Thyristor T, wenn die Erdungsleitung 2 (Bauwerkserde) gegenüber der Rückleitung 1 positives Potential annimmt. Dies ist beispielsweise dann der Fall, wenn positive Blitze einen Isolatorüberschlag verursachen.

Auf eine an sich mögliche antiparallele Thyristorbeschaltung wurde verzichtet, da Netzfolgeströme und damit lang anstehende Spannungen gegen Erde nur mit dieser Polarität auftreten.

Der Thyristor T soll nur bei Überschlägen, d. h. bei einem Fehlerfall in der Bahnstromversorgungsanlage zünden und die Rückleitung 1 und die Erdungsleitung 2 miteinander verbinden. Damit ergeben sich die technischen Anforderungen an den Thyristor T aus den möglichen Kurzschluß- bzw. Netzfolgeströmen.

Die Höhe der Netzfolgeströme wird sowohl von der Entfernung des Kurzschlusses zum Unterwerk als auch vom Übergangswiderstand zwischen der Erdungsleitung 2 und der Rückleitung 1 bestimmt. Bei Anwendungen in der Bahnstromversorgung mit beispielsweise einer Fahrdrahtgleichspannung von 1500 Volt können damit Ströme bis zu 75 kA auftreten. Es sollte deshalb ein Thyristor mit möglichst hoher Strombelastbarkeit gewählt werden.

Die Ansteuerung des Thyristors T erfolgt über die Ansteuerschaltung, die von der Schutzdiode D, dem Zündvorwiderstand R und der Breakover Diode BOD gebildet wird. Wie aus der Zeichnung ersichtlich, ist die Ansteuerschaltung einfach aufgebaut und benötigt im Gegensatz zu anderen elektronischen Ansteuerungen keine Hilfsspannungsversorgung.

Für die Ansteuerung des Thyristors T gewählte Zündspannung liegt vorzugsweise bei 600 Volt. Dies ist derzeit die niedrigste, standardmäßig verfügbare Zündspannung bei Breakover Dioden. Diese Zündspannung liegt sicher über der betriebsmäßigen Ansprechspannung der mechanischen Schaltvorrichtung SM. Andererseits ist diese Zündspannung aber ausreichend niedrig für die angestrebte Verbesserung des Anlagenschutzes.

Der Zündvorwiderstand R ist so zu dimensionieren, daß einerseits die Breakover Diode BOD nicht zerstört wird und daß andererseits der Stromimpuls für die Ansteuerung des Thyristors T ausreichend groß ist.

Die Schutzdiode D gewährleistet den Schutz der Breakover Diode BOD vor rückwärtigen Überspannungen.

Über das Stromrelais F, das dem Thyristor T vorgeschaltet ist, wird über einen potentialfreien Kontakt die mechanische Schaltvorrichtung SM der Einrichtung zum Kurzschließen angesteuert. Der potentialfreie Kontakt des Stromrelais F wird hierbei bei einem Mindeststrom von 15 Ampere geschlossen.

Bei einem Auftreten von Kurzschlüssen oder Netzfolgeströmen zündet zunächst der Thyristor T. Der Thyristor T übernimmt nach ca. 1 bis 2 Mikrosekunden den Laststrom. Im beschriebenen Ausführungsbeispiel schaltet nach ca. 65 Millisekunden die mechanische Schaltvorrichtung SM zu und übernimmt den Laststrom. Der Thyristor T verlöscht. Die vollständige Kommutierung des Laststromes vom Thyristor T zur mechanischen Schaltvorrichtung SM dauert etwa 0,5 Millisekunden.

Die in der Zeichnung dargestellte Thyristorbeschaltung mit Zündung über eine Breakover Diode wirkt als einfache und funktionssichere Kurzschlußeinrichtung innerhalb von ca. 2 Mikrosekunden, wobei das Stromrelais F die mechanische Schaltvorrichtung SM ansteuert (Mitnahmeschaltung). Der Thyristor T verlöscht nach Ansprechen der mechanischen Schaltvorrichtung SM selbsttätig.

Üblicherweise benötigen Einrichtungen zum Kurzschließen auch eine Ruhezeit. Bei einer Ruhezeit von 120 Millisekunden, die vergehen muß, bevor die elektronische Schaltvorrichtung SE wieder einschaltbereit ist, muß der Thyristor T maximal ca. 200 Millisekunden den Laststrom führen.

## Patentansprüche

1. Einrichtung zum Kurzschließen einer ersten elektrischen Leitung (1) mit einer zweiten elektrischen Leitung (2), wobei die erste elektrische Leitung (1) und die zweite elektrische Leitung (2) durch wenigstens eine mechanische Schaltvorrichtung (SM) kurzschließbar sind, **gekennzeichnet durch** folgendes Merkmal:
- parallel zur mechanischen Schaltvorrichtung (SM) ist wenigstens eine elektronische Schaltvorrichtung (SE) angeordnet, **durch** die die Spannungsdifferenz zwischen der ersten elektrischen Leitung (1) und der zweiten elektrischen Leitung (2) überbrückbar ist.

2. Einrichtung zum Kurzschließen nach Anspruch 1, **gekennzeichnet durch** folgendes Merkmal:
- **durch** die elektronische Schaltvorrichtung (SE) ist nach dem Überbrücken der ersten elektrischen Leitung (1) und der zweiten elektrischen Leitung (2) zusätzlich die mechanische Schaltvorrichtung (SM) auslösbar.

3. Einrichtung zum Kurzschließen nach Anspruch 2, **gekennzeichnet durch** folgendes Merkmal:
- nach dem Schließen der mechanischen Schaltvorrichtung (SM) ist die elektronische Schaltvorrichtung (SE) spannungsfrei schaltbar.

4. Einrichtung zum Kurzschließen nach Anspruch 1, **gekennzeichnet durch** folgende Merkmale:
- die elektronische Schaltvorrichtung (SE) ist als Thyristorbeschaltung ausgebildet, wobei
- die Thyristorbeschaltung wenigstens einen Thyristor (T) umfaßt, dessen Kathode mit der ersten elektrischen Leitung (1) und dessen Anode mit der zweiten elektrischen Leitung (2) verbunden ist, und wobei
- an das Gate des Thyristors (T) eine Ansteuerschaltung geführt ist, die eine Reihenschaltung aus Breakover Diode (BOD), Zündvorwiderstand (R) und Schutzdiode (D) umfaßt.

5. Einrichtung zum Kurzschließen nach Anspruch 4, **gekennzeichnet durch** folgendes Merkmal:
- dem Thyristor (T) ist ein Stromrelais (F) vorgeschaltet, das nach dem Überbrücken der ersten elektrischen Leitung (1) und der zweiten elektrischen Leitung (2) die mechanische Schaltvorrichtung (SM) ansteuert.

6. Einrichtung zum Kurzschließen nach Anspruch 4 oder 5, **gekennzeichnet durch** folgendes Merkmal:
- der Thyristor (T) besitzt Ansprechzeiten von ca. 1 bis 2 Mikrosekunden.

7. Einrichtung zum Kurzschließen nach Anspruch 4, **gekennzeichnet durch** folgendes Merkmal:
- die Breakover Diode (BOD) besitzt eine Zündspannung von 400 bis 600 Volt.

## Claims

1. Device for short-circuiting a first electrical line (1) to a second electrical line (2) wherein the first electrical line (1) and the second electrical line (2) can be short-circuited by at least one mechanical switching device (SM), **characterized by** the following feature:
- there is disposed parallel to the mechanical switching device (SM) at least one electronic switching device (SE) which can shunt out the voltage difference between the first electrical line (1) and the second electrical line (2).

2. Device for short-circuiting according to Claim 1, **characterized by** the following feature:
- after shunting the first electrical line (1) and the second electrical line (2) out, the electronic switching device (SE) can additionally trigger the mechanical switching device (SM).

3. Device for short-circuiting according to Claim 2, **characterized by** the following feature:
- after the closure of the mechanical switching device (SM), the electronic switching device (SE) can be de-energized.

4. Device for short-circuiting according to Claim 1, **characterized by** the following features:
- the electronic switching device (SE) is designed as a thyristor circuit, wherein
- the thyristor circuit comprises at least one thyristor (T) whose cathode is connected to the first electrical line (1) and whose anode is connected to the second electrical line (2), and wherein
- there is connected to the gate of the thyristor (T) a triggering circuit that comprises a series connection of breakover diode (BOD), series firing resistor (R) and protective diode (D).

5. Device for short-circuiting according to Claim 4, **characterized by** the following feature:
- connected upstream of the thyristor (T) is a current relay (F) that triggers the mechanical switching device (SM) after shunting the first electrical line (1) and the second electrical line (2) out.

6. Device for short-circuiting according to Claim 4 or 5, **characterized by** the following feature:
- the thyristor (T) has response times of approximately 1 to 2 microseconds.

7. Device for short-circuiting according to Claim 4, **characterized by** the following feature:
- the breakover diode (BOD) has a firing voltage of 400 to 600 volts.

## Revendications

1. Dispositif pour court-circuiter une première ligne (1) électrique avec une deuxième ligne (2) électrique, la première ligne (1) électrique et la deuxième ligne (2) électrique pouvant être court-circuitées par au moins un dispositif (SM) mécanique de commutation, **caractérisé par** la caractéristique suivante :
- il est monté en parallèle au dispositif (SM) mécanique de commutation au moins un dispositif (SE) électronique de commutation, par lequel la différence de tension entre la première ligne (1) électrique et la deuxième ligne (2) électrique peut être surmontée.

2. Dispositif de court-circuitage suivant la revendication 1, **caractérisé par** la caractéristique suivante :
- après que la différence de tension entre la première ligne (1) électrique et la deuxième ligne (2) électrique a été surmontée, le dispositif (SM) mécanique de commutation peut être en outre déclenché par le dispositif (SE) électronique de commutation.

3. Dispositif de court-circuitage suivant la revendication 2, **caractérisé par** la caractéristique suivante :
- après la fermeture du dispositif (SM) mécanique de commutation, le dispositif (SE) électronique de commutation peut être commuté sans tension.

4. Dispositif de court-circuitage suivant la revendication 1, **caractérisé par** les caractéristiques suivantes :
- le dispositif (SE) électronique de commutation est constitué sous la forme d'un circuit à thyristor,
- le circuit à thyristor comprend au moins un thyristor (T) dont la cathode est reliée à la première ligne (1) électrique et dont l'anode est reliée à la deuxième ligne (2) électrique, et
- il arrive à la grille du thyristor (T) un circuit de commande qui comprend un circuit série constitué d'une diode de breakover (BOD), d'une résistance (R) d'amorçage et d'une diode (D) de protection.

5. Dispositif de court-circuitage suivant la revendication 4, **caractérisé par** la caractéristique suivante :
- il est monté en amont du thyristor (T) un relais (F) de courant qui, après que la différence de tension pour la ligne (1) électrique et la deuxième ligne (2) électrique a été surmontée, commande le circuit (SM) mécanique de commutation.

6. Dispositif de court-circuitage suivant la revendication 4 ou 5, **caractérisé par** la caractéristique suivante :
- le thyristor (T) a des temps de réponse d'environ 1 à 2 microsecondes.

7. Dispositif de court-circuitage suivant la revendication 4, **caractérisé par** la caractéristique suivante :
- la diode de breakover (BOD) a une tension d'amorçage de 400 à 600 V.
